# EUROPEAN PATENT SPECIFICATION

(11) **EP 4 286 679 B1**
(45) Date of publication and mention of the grant of the patent: **17.09.2025**
(21) Application number: 23176356.6
(22) Date of filing: 31.05.2023
(51) Int. Cl.: F04B 17/06, F04B 53/16, F04D 3/00, F02M 37/08, F16L 25/00, F04D 9/00, F04D 13/06, F04D 13/08, F04D 15/00, F04D 29/08, F04D 29/42, F16L 11/15, F16L 27/08, F04B 53/22

(54) **MODULAR FUEL TRANSFER PUMP FLOW PASSAGE STRUCTURE AND FUEL TRANSFER PUMP**
MODULARE KRAFTSTOFFTRANSFERPUMPEN-STRÖMUNGSKANALSTRUKTUR UND KRAFTSTOFFTRANSFERPUMPE
STRUCTURE MODULAIRE DE PASSAGE D'ÉCOULEMENT DE POMPE DE TRANSFERT DE CARBURANT ET POMPE DE TRANSFERT DE CARBURANT

(30) Priority: 01.06.2022 US 202217829459
(43) Date of publication of application: 06.12.2023
(73) Proprietor: Zhongshan Peili Technology Co., Ltd., Zhongshan City, Guangdong 528415 (CN)
(72) Inventor: Lai, Chunlai, Zhongshan City (CN)
(74) Representative: López Camba, Emilia

(56) References cited:
- US-A- 4 570 833
- US-A- 4 722 556
- US-A1- 2015 247 504
- US-A1- 2018 258 893
- US-A1- 2021 388 595
- US-B1- 10 989 198
- US-B1- 6 352 088
- US-B1- 7 722 091

## Description

### Technical field

The present invention relates to the technical field of fuel transfer pumps, in particular to a modular fuel transfer pump flow passage structure and a fuel transfer pump.

### technical background

Fuel transfer pump, whose function is to pump gasoline or diesel oil from oil drums to vehicles, ships or mechanical fuel equipment for operation and operation, can also pump fuel from the oil tank of mechanical equipment so as to facilitate operators to carry out subsequent maintenance and overhaul operations, among which portable pump is widely used in such scenes.

Although many portable fuel transfer pumps are disclosed in the prior art, there are still many shortcomings: 1, the flow passage structure of the fuel transfer pump is mostly integrated with the pump housing, and the structure of its parts is complex, which leads to complicated production and assembly process and inconvenient operation, and also leads to high development and production cost of the mold; 2, both the oil inlet pipe and the oil outlet pipe of the fuel transfer pump's flow passage are zigzag bellows, so the wall of the bellows designed in this way will increase the resistance of fluid flow, which will further affect the important performance parameters of the pump body's flow and head; 3 in order to avoid the siphon phenomenon when the flow passage of the fuel transfer pump stops working, the existing design will set ventilation valves in the flow passage, and the valves are of bidirectional ventilation structure, which has complex structure and requires high accuracy of parts, and inevitably there will be the problem of oil leakage; 4, the motor is in the oil, and the whole motor needs to be sealed. The existing structure adopts the cylindrical seal of the motor casing, which is not on the same force surface as the force of pressing and sealing, and the sealing area is small, which is easy to seal, leading to the risk of oil leakage into the motor; 5, when the infrared sensor switch is placed in the oil outlet, it is easy for the liquid to flow to the sensor head and turn it off by mistake.

In the state of the art are known the following documents:
- US6352088 B1, which discloses a wastewater drainage system for a vehicle, such as a recreational vehicle (RV). The system includes a pump, such as a macerator pump, in selective fluid communication with the black water tank and the gray water tank, and a drainage hose connected to the exit end of the pump for directing wastewater to a wastewater storage area.
- US2021388595 A1, which discloses a sewage discharge device detachably and hermetically connected to a sewage tank includes a drain pipe and a main box body. A drain control valve and a self-priming drain pump are provided inside the main box body.
- US2018/258893 A1, which discloses a fuel pump which includes a motor having an armature which rotates about an axis.

Based on the above problems, it is necessary to provide a brand-new fuel transfer pump pipe and fuel transfer pump. The fuel transfer pump pipe and all parts of the fuel transfer pump are formed independently and are not integrated with the pump housing, which can be flexibly assembled into parts without affecting the flow and performance parameters of the pump body, and can also avoid the risk of oil leakage.

### Summary of the present invention

The present invention provides a modular fuel transfer pump flow passage structure, which includes an oil inlet bellows, a lead sealing plug, an adapter, an air vent valve and an oil outlet bellows, wherein connection ports at both ends of the adapter are respectively equipped and fixed with an oil inlet bellows and an oil outlet bellows by using fasteners; the adapter is fixedly provided with an oil inlet pipe of the oil inlet bellows, and an end wall surface in an axial direction of the adapter is provided with a vent hole; a vent valve equipped with a vent cap is arranged outside the vent hole; an oil outlet pipe of the oil outlet bellows is fixedly installed on the adapter, and a through hole is formed on the end wall surface in the axial direction of the adapter, and the lead sealing plug is installed in the through hole; an inner cavity wall of the fastener is opposite to the structure of the bellows, and a corrugated structure for wedging and fixing is also integrally formed; outer walls at the two ends of the adapter are integrally formed with annular bosses for the fastener to be fixedly installed.

At the same time, the present invention provides a fuel transfer pump, which includes the modular fuel transfer pump flow passage structure provided above, and further includes a connecting pipe arranged at a free end of the oil inlet bellows, a pump built in the connecting pipe, a gun nozzle arranged at a free end of the oil outlet bellows and a control box arranged outside the adapter, wherein the control box is internally provided with a PCB board and a battery and is electrically connected with the pump through wires; the pump comprises an outer casing and a built-in motor, and impellers are arranged on an output shaft of the motor; the motor is provided with a first sealing mechanism at one side close to a liquid inlet of the connecting pipe, and the motor is provided with a second sealing mechanism at one side close to a liquid outlet of the *connecting pipe.*

At the same time, the present invention provides a fuel transfer pump, which comprises an oil inlet bellows and an oil outlet bellows connected by an adapter, wherein the adapter is provided with a lead sealing plug and a vent valve, wherein the fuel transfer pump further comprises a connecting pipe arranged at a free end of the oil inlet bellows, a pump built in the connecting pipe, a gun nozzle arranged at a free end of the oil outlet bellows and a control box arranged outside the adapter, wherein the control box is internally provided with a PCB board and a battery and is electrically connected with the pump through wires; the pump comprises an outer casing and a built-in motor, and impellers are arranged on an output shaft of the motor; the motor is provided with a first sealing mechanism at one side close to a liquid inlet of the connecting pipe, and the motor is provided with a second sealing mechanism at one side close to a liquid outlet of the connecting pipe.

### Brief description of drawings

In order to explain the technical scheme of this application more clearly, the drawings needed in the implementation will be briefly introduced below. Obviously, the drawings described below are only some implementations of this application. For those skilled in the art, other drawings can be obtained according to these drawings without creative work.
FIG. 1 is an exploded view of a modular fuel transfer pump flow passage structure;
FIG. 2 is a schematic view of some parts in FIG. 1;
FIG. 3 is a structural sectional view of a modular fuel transfer pump flow passage structure provided by the present invention;
FIG. 4 is an assembly diagram of a modular fuel transfer pump flow passage structure provided by the present invention;
FIG. 5 is a schematic structural view of the vent valve;
FIG. 6 is a perspective view of a fuel transfer pump provided by the present invention;
FIG. 7 is a sectional view of the connecting pipe and the pump;
FIG. 8 is an explosion diagram at the control box;
FIG. 9 is a schematic view of a gun nozzle;
FIG. 10 is a cross-sectional view of the gun nozzle;
FIG. 11 is a schematic diagram of a fuel transfer pump equipped with a nozzle sleeve.

In the figures: 1, Oil inlet bellows; 2, First fastener; 3, First mating part; 4, Lead sealing plug; 5, Adapter; 6, Vent valve; 7, Vent cap; 8, Second fastener; 9, Second mating part; 10, Oil outlet bellows; 100, Oil inlet pipe; 101, Vent hole; 200, Oil outlet pipe; 201, Through hole; 300, Annular boss; 600, Normally closed vent; 11, Connecting pipe; 111, Liquid inlet; 112, Liquid outlet; 12, Pump; 121, Outer casing; 1211, Sealing part; 122, Motor; 123, Impeller; a, gland; b, Rubber seal; c, Motor shaft sealing; d, rubber part; d1, Sealing hole; 13, Gun nozzle; 131, Mounting pipe; 14, Control box; 141, PCB board; 142, Battery; 15, Control switch; 16, Indicator light; 17, Infrared sensor; 18, Nozzle sleeve; 19, Fixing rope.

### Detailed description

In the following, the technical scheme in the embodiment of the application will be clearly and completely described with reference to the drawings in the embodiment of the application. Obviously, the described embodiment is only a part of the embodiment of the application, but not the whole embodiment. Based on the embodiments in this application, all other embodiments obtained by ordinary technicians in this field without creative labor belong to the protection scope of this application.

Reference to "an example" or "an embodiment" herein means that a particular feature, structure or characteristic described in connection with an embodiment or an embodiment can be included in at least one embodiment of this application. The appearance of this phrase in various places in the specification does not necessarily refer to the same embodiment, nor is it an independent or alternative embodiment mutually exclusive with other embodiments. It is understood explicitly and implicitly by those skilled in the art that the embodiments described herein can be combined with other embodiments.

In this specification, for the sake of convenience, words and expressions indicating orientation or positional relationship such as "middle", "upper", "lower", "front", "rear", "vertical", "horizontal", "top", "inner" and "outer" are used to illustrate the positional relationship of constituent elements with reference to the attached drawings, only for the convenience of description. The positional relationship of the constituent elements is appropriately changed according to the direction of the described constituent elements. Therefore, it is not limited to the words and expressions described in the specification, and can be replaced appropriately according to the situation.

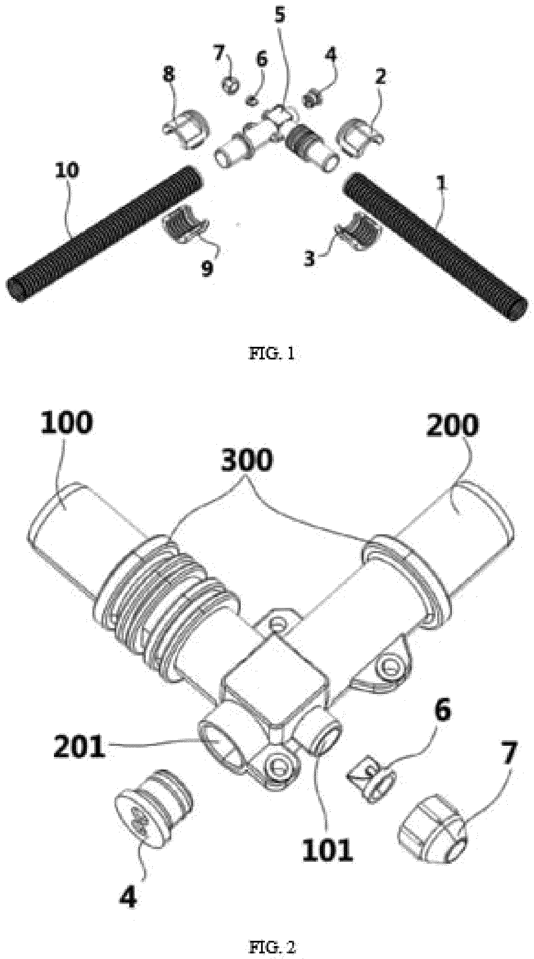

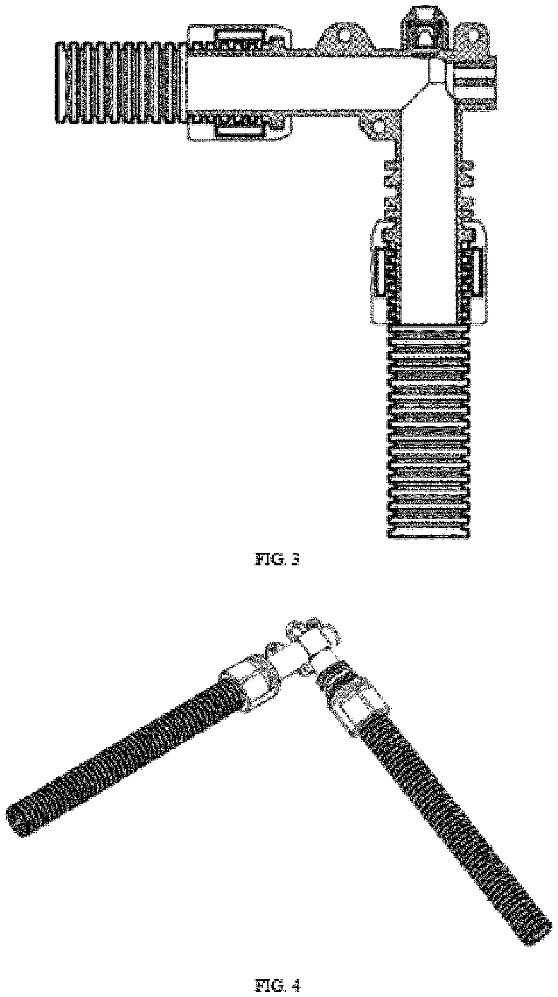

As shown in FIG. 1 to FIG. 4, the present invention provides a modular fuel transfer pump flow passage structure, which includes an oil inlet bellows 1, a lead sealing plug 4, an adapter 5, an air vent valve 6 and an oil outlet bellows 10, wherein connection ports at both ends of the adapter 5 are respectively equipped and fixed with an oil inlet bellows 1 and an oil outlet bellows 10 by using fasteners; the adapter 5 is fixedly provided with an oil inlet pipe 100 of the oil inlet bellows 1, and an end wall surface in an axial direction of the adapter 5 is provided with a vent hole 101; the air vent valve 6 is equipped with a vent cap 7 is arranged outside the vent hole 101; an oil outlet pipe 200 of the oil outlet bellows 10 is fixedly installed on the adapter 5, and a through hole 201 is formed on the end wall surface in the axial direction of the adapter 5, and the lead sealing plug 4 is installed in the through hole 201; an inner cavity wall of the fastener is opposite to the structure of the bellows, and a corrugated structure for wedging and fixing is also integrally formed; outer walls at the two ends of the adapter 5 are integrally formed with annular bosses 300 for the fastener to be fixedly installed.

The fastener for fixing the oil inlet bellows 1 consists of a first fastener 2 and a first mating part 3, while the fastener for fixing the oil outlet bellows 10 consists of a second fastener 8 and a second mating part 9; both the oil inlet bellows 1 and the oil outlet bellows 10 are corrugated hoses with a circular design; both the first fastener 2 and the second fastener 8 are integrally formed with inverted buttons to match the locking positions of the first mating part 3 and the second mating part 9 respectively; the air vent valve 6 is a one-way normally closed soft rubber valve, and a mounting direction of one end with a normally closed vent 600 is toward the inner cavity of the adapter 5. In some embodiments (not shown in the figure), the air vent valve 6 can also be a conventional valve with unlimited shape, as long as the valve ensures that the external air can flow into the adapter 5, and the high-pressure oil in the adapter 5 can make the valve and the valve seat close to each other to achieve sealing when working.

Compared with the existing fuel transfer pump integrated with the pump casing, the present invention adopts the modular design that all components are formed independently and can be assembled flexibly, and can be fixed on the pump casing after assembly, in which the main role is the adapter, which is connected with the oil inlet bellows, the oil outlet bellows, the vent hole provided with the vent valve and the lead sealing plug connected with the motor, so that the interfaces can be assembled more intuitively, simply and conveniently without mutual interference.

It should be noted that the vent valve provided by the present invention is a normally closed unidirectional soft rubber valve which opens inward, and its functions and functions are as follows: when the motor of the fuel transfer pump stops working, the liquid in the flow passage will generate negative pressure due to gravity, and the atmospheric pressure at the outside of the vent valve will be greater than the negative pressure at the inside of the vent valve, and the valve will be opened to let gas enter the flow passage, so that the flow passage is disconnected, and the siphon phenomenon of the flow passage can be avoided; When the motor of the pump starts to work, because of the pressure in the flow passage, the pressure of the liquid inside the vent valve is greater than the atmospheric pressure outside the machine, which will make the valve stick more tightly and close tightly, so that the liquid will not leak out. A soft rubber material is selected as the manufacturing material of the vent valve because the soft rubber material combined with the one-way design structure of the vent valve can make the vent valve close to itself and keep the normally closed state without external pressure.

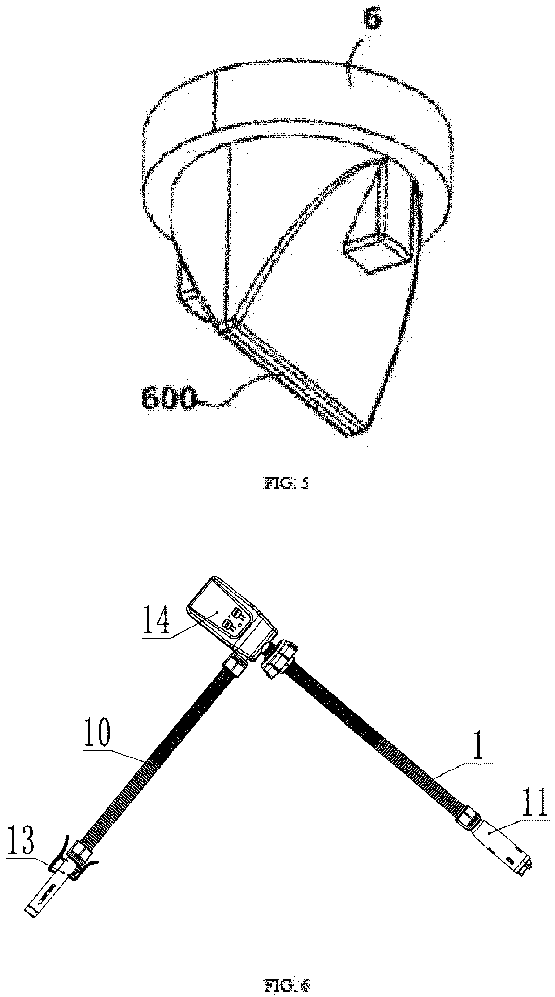

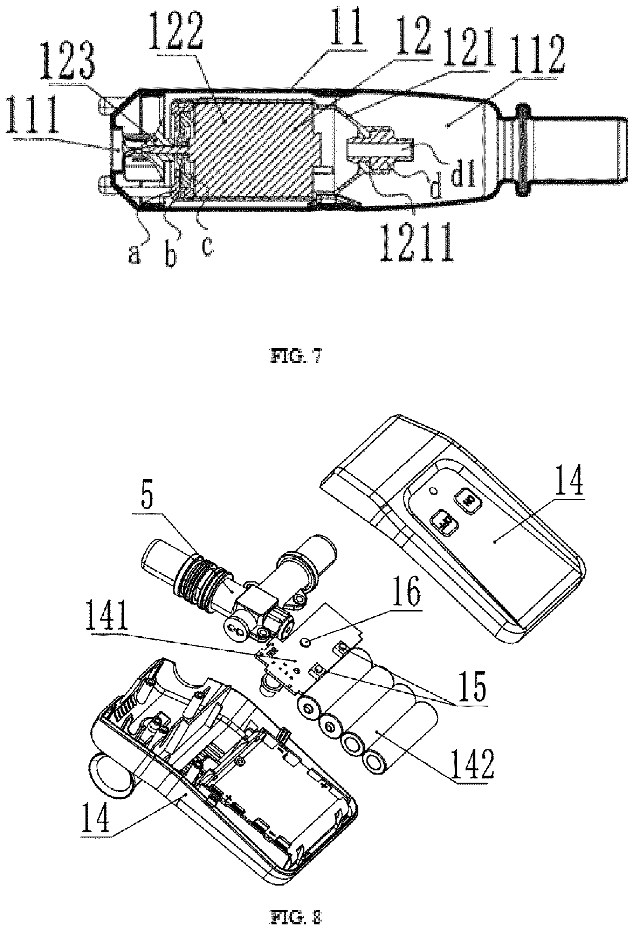

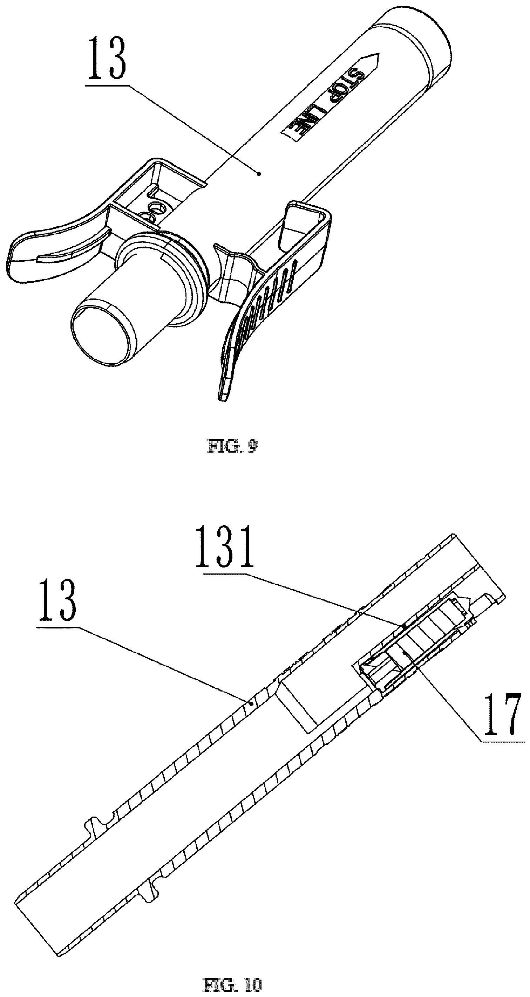

As shown in FIG. 6 to FIG. 10, the present invention also provides a fuel transfer pump, which has the above-mentioned modular fuel transfer pump flow passage structure, and further includes a connecting pipe 11 arranged at a free end of the oil inlet bellows 1, a pump 12 built in the connecting pipe 11, a gun nozzle 13 arranged at a free end of the oil outlet bellows 10 and a control box 14 arranged outside the adapter 5, wherein the control box 14 is internally provided with a PCB board 141 and a battery 142 and is electrically connected with the pump 12 through wires; the pump 12 comprises an outer casing 121 and a built-in motor 122, and impellers 123 are arranged on an output shaft of the motor 122; the motor 122 is provided with a first sealing mechanism at one side close to a liquid inlet 111 of the connecting pipe 11, and the motor 122 is provided with a second sealing mechanism at one side close to a liquid outlet 112 of the connecting pipe 11;

The connection between the oil inlet bellows 1 and the connecting pipe 11, and the connection between the oil outlet bellows 10 and the gun nozzle 13 are also realized by fasteners, so as to facilitate quick disassembly; the first sealing mechanism includes a gland a, the gland a is embedded and clamped at an end of the outer casing 121, an output end of the motor 122 is sleeved and connected with a motor shaft seal c, and the motor shaft seal c is embedded and installed inside the gland a; a rubber seal b is further arranged between the gland a and the outer casing 121; the second sealing mechanism comprises a rubber part d, and a sealing part 1211 is formed on one side of the outer casing 121; one end of the rubber part d penetrates through the sealing part 1211 and is clamped with an inner wall of the sealing part 1211; an outer surface of the rubber part d is provided with a sealing hole d1 matched with an electric wiring of the motor 122, and an outer wall of the electric wiring of the motor 122 is fixedly connected with an inner wall of the sealing hole d1 in a sealed manner, so that the sealing performance of the electric wiring of the motor 122 can be improved; a control switch 15 and an indicator light 16 are embedded in an outer surface of the control box 14 in sequence, and the control switch 15 and the indicator light 16 are electrically connected with the motor 122; a DC socket is embedded in one side of an outer surface of the control box 14, so as to realize external power connection; a mounting pipe 131 is formed on one side of an inner wall of an output end of the gun nozzle 13, and a sensing shell is embedded in the mounting pipe 131; an infrared sensor 17 is installed in a cavity of the sensing shell, and the infrared sensor 17 is connected to the control box 13 by an electric wiring; a rubber sealing plug is further arranged between the mounting pipe 131 and the sensing shell, and the electric wiring of the infrared sensor 17 passes through the rubber sealing plug, and the sealing assembly is realized through the rubber sealing plug, so that the infrared sensor 17 is completely sealed in the inner cavity of the sensing shell.

In the fuel transfer pump, through the first sealing mechanism and the second sealing mechanism, the end face and radial sealing are adopted, and the oil pressure and the clamping force of the gland are in the same direction, so that the sealing surface always has a pressing force acting, and the sealing performance of the motor can be improved; the on or off state of the motor can be clearly seen through the indicator light, and the infrared sensor is arranged outside the flow channel, so that it is not in direct contact with the liquid, thus avoiding the misjudgment reaction.

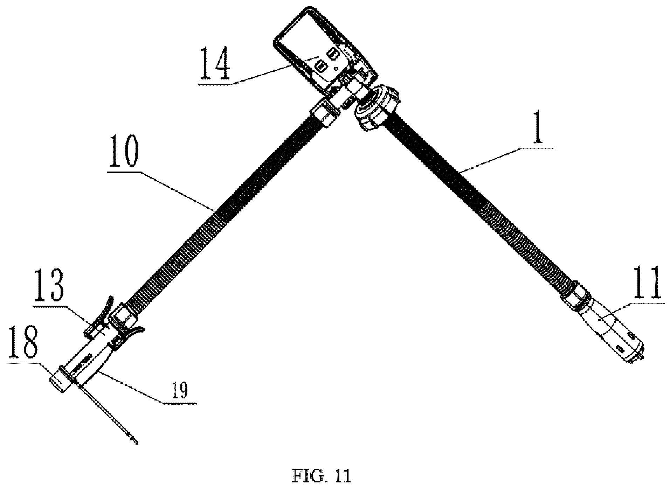

The nozzle 13 of the fuel transfer pump is also equipped with a nozzle sleeve 18, as shown in FIG. 11. The nozzle sleeve 18 is connected to the nozzle 13 through a fixing rope 19. When the fuel transfer pump is stored, the nozzle sleeve 18 is sleeved on the nozzle 13 to prevent residual oil from flowing out after the fuel transfer pump is used, and also to prevent impurities and dust from entering the internal flow passage of the fuel transfer pump to cause pollution.

## Claims

1. A modular fuel transfer pump flow passage structure, comprising an oil inlet bellows (1), a lead sealing plug (4), an adapter (5), an air vent valve (6) and an oil outlet bellows (10), wherein connection ports at both ends of the adapter (5) are respectively equipped and fixed with an oil inlet bellows (1) and an oil outlet bellows (10) by using fasteners; the adapter (5) is fixedly provided with an oil inlet pipe (100) of the oil inlet bellows (1), and an end wall surface in an axial direction of the adapter (5) is provided with a vent hole (101);
**characterized in that**
the air vent valve (6) is equipped with a vent cap (7) arranged outside the vent hole (101); an oil outlet pipe (200) of the oil outlet bellows (10) is fixedly installed on the adapter (5), and a through hole (201) is formed on the end wall surface in the axial direction of the adapter (5), and the lead sealing plug (4) is installed in the through hole (201); an inner cavity wall of the fastener is opposite to the structure of the bellows, and a corrugated structure for wedging and fixing is also integrally formed; outer walls at the two ends of the adapter (5) are integrally formed with annular bosses (300) for the fastener to be fixedly installed.

2. The modular fuel transfer pump flow passage structure according to claim 1, wherein the fastener for fixing the oil inlet bellows (1) consists of a first fastener (2) and a first mating part (3), while the fastener for fixing the oil outlet bellows (10) consists of a second fastener (8) and a second mating part (9).

3. The modular fuel transfer pump flow passage structure according to claim 1, wherein both the oil inlet bellows (1) and the oil outlet bellows (10) are corrugated hoses with a circular design.

4. The modular fuel transfer pump flow passage structure according to claim 2, wherein both the first fastener (2) and the second fastener (8) are integrally formed with inverted buttons to match the locking positions of the first mating part (3) and the second mating part (9) respectively.

5. The modular fuel transfer pump flow passage structure according to claim 1, wherein the air vent valve (6) is a one-way normally closed soft rubber valve, and a mounting direction of one end with a normally closed vent (600) is toward the inner cavity of the adapter (5).

6. A fuel transfer pump, comprising an oil inlet bellows (1) and an oil outlet bellows (10) connected by an adapter (5), wherein the adapter (5) is provided with a lead sealing plug (4) and an air vent valve (6), wherein the fuel transfer pump further comprises a connecting pipe (11) arranged at a free end of the oil inlet bellows (1), a pump (12) built in the connecting pipe (11), a gun nozzle (13) arranged at a free end of the oil outlet bellows (10) and a control box (14) arranged outside the adapter (5), wherein the control box (14) is internally provided with a PCB board (141) and a battery (142) and is electrically connected with the pump (12) through wires; the pump (12) comprises an outer casing (121) and a built-in motor (122), and impellers (123) are arranged on an output shaft of the motor (122); the motor (122) is provided with a first sealing mechanism at one side close to a liquid inlet (111) of the connecting pipe (11), and the motor (122) is provided with a second sealing mechanism at one side close to a liquid outlet (112) of the connecting pipe (11).

7. The fuel transfer pump according to claim 6, wherein the first sealing mechanism comprises a gland (a), the gland (a) is embedded and clamped at an end of the outer casing (121), an output end of the motor (122) is sleeved and connected with a motor shaft seal (c), and the motor shaft seal (c) is embedded and installed inside the gland (a); a rubber seal (b) is further arranged between the gland (a) and the outer casing (121); the second sealing mechanism comprises a rubber part (d), and a sealing part (1211) is formed on one side of the outer casing (121); one end of the rubber part (d) penetrates through the sealing part (1211) and is clamped with an inner wall of the sealing part (1211); an outer surface of the rubber part (d) is provided with a sealing hole (d1) matched with an electric wiring of the motor (122), and an outer wall of the electric wiring of the motor (122) is fixedly connected with an inner wall of the sealing hole (d1) in a sealed manner, so that the sealing performance of the electric wiring of the motor (122) can be improved.

8. A fuel transfer pump, comprising a modular fuel transfer pump flow passage structure according to claim 1 and a fuel transfer pump according to claim 6,

9. The fuel transfer pump according to claim 8, wherein the connection between the oil inlet bellows (1) and the connecting pipe (11), and the connection between the oil outlet bellows (10) and the gun nozzle (13) are also realized by fasteners, so as to facilitate quick disassembly.

10. The fuel transfer pump according to claim 9, wherein the first sealing mechanism comprises a gland (a), the gland (a) is embedded and clamped at an end of the outer casing (121), an output end of the motor (122) is sleeved and connected with a motor shaft seal (c), and the motor shaft seal (c) is embedded and installed inside the gland (a); a rubber seal (b) is further arranged between the gland (a) and the outer casing (121); the second sealing mechanism comprises a rubber part (d), and a sealing part (1211) is formed on one side of the outer casing (121); one end of the rubber part (d) penetrates through the sealing part (1211) and is clamped with an inner wall of the sealing part (1211); an outer surface of the rubber part (d) is provided with a sealing hole (d1) matched with an electric wiring of the motor (122), and an outer wall of the electric wiring of the motor (122) is fixedly connected with an inner wall of the sealing hole (d1) in a sealed manner, so that the sealing performance of the electric wiring of the motor (122) can be improved.

11. The fuel transfer pump according to claim 10, wherein a control switch (15) and an indicator light (16) are embedded in an outer surface of the control box (14) in sequence, and the control switch (15) and the indicator light (16) are electrically connected with the motor (122); a DC socket is embedded in one side of an outer surface of the control box (14), so as to realize external power connection.

12. The fuel transfer pump according to claim 11, wherein a mounting pipe (131) is formed on one side of an inner wall of an output end of the gun nozzle (13), and a sensing shell is embedded in the mounting pipe (131); an infrared sensor (17) is installed in a cavity of the sensing shell, and the infrared sensor (17) is connected to the control box (13) by an electric wiring; a rubber sealing plug is further arranged between the mounting pipe (131) and the sensing shell, and the electric wiring of the infrared sensor (17) passes through the rubber sealing plug, and the sealing assembly is realized through the rubber sealing plug, so that the infrared sensor (17) is completely sealed in the inner cavity of the sensing shell.

## Patentansprüche

1. Modulare Durchflusskanalstruktur für eine Kraftstoffförderpumpe, umfassend einen Öleinlassbalg (1), einen Bleidichtungsstopfen (4), einen Adapter (5), ein Luftentlüftungsventil (6) und einen Ölauslassbalg (10), wobei Verbindungsanschlüsse an beiden Enden des Adapters (5) jeweils mit einem Öleinlassbalg (1) und einem Ölauslassbalg (10) unter Verwendung von Befestigungselement ausgestattet und fixiert sind; wobei der Adapter (5) fest mit einem Öleinlassrohr (100) des Öleinlassbalgs (1) versehen ist, und wobei eine Endwandfläche in axialer Richtung des Adapters (5) mit einem Entlüftungsloch (101) versehen ist;
**dadurch gekennzeichnet, dass**
das Luftentlüftungsventil (6) mit einer Entlüftungskappe (7) ausgestattet ist, die außerhalb des Entlüftungslochs (101) angeordnet ist; wobei ein Ölauslassrohr (200) des Ölauslassbalgs (10) fest am Adapter (5) installiert ist, wobei ein Durchgangsloch (201) auf der Endwandfläche in axialer Richtung des Adapters (5) ausgebildet ist, wobei der Bleidichtungsstopfen (4) in dem Durchgangsloch (201) installiert ist; wobei eine Innenhohlraumwand des Befestigungselements der Balgstruktur gegenüberliegend ist, und wobei eine gewellte Struktur zum Einklemmen und Fixieren ebenfalls integral ausgebildet ist; wobei Außenwände an den beiden Enden des Adapters (5) integral mit ringförmigen Vorsprüngen (300) ausgebildet sind, damit das Befestigungselement fest installiert werden kann.

2. Modulare Durchflusskanalstruktur für eine Kraftstoffförderpumpe nach Anspruch 1, wobei das Befestigungselement zur Fixierung des Öleinlassbalgs (1) aus einem ersten Befestigungselement (2) und einem ersten Gegenstück (3) besteht, während das Befestigungselement zur Fixierung des Ölauslassbalgs (10) aus einem zweiten Befestigungselement (8) und einem zweiten Gegenstück (9) besteht.

3. Modulare Durchflusskanalstruktur für eine Kraftstoffförderpumpe nach Anspruch 1, wobei sowohl der Öleinlassbalg (1) als auch der Ölauslassbalg (10) Wellschläuche mit einem kreisförmigen Design sind.

4. Modulare Durchflusskanalstruktur für eine Kraftstoffförderpumpe nach Anspruch 2, wobei sowohl das erste Befestigungselement (2) als auch das zweite Befestigungselement (8) integral mit umgekehrten Knöpfen ausgebildet sind, um jeweils mit den Verriegelungspositionen des ersten Gegenstücks (3) und des zweiten Gegenstücks (9) abzustimmen.

5. Modulare Durchflusskanalstruktur für eine Kraftstoffförderpumpe nach Anspruch 1, wobei das Luftentlüftungsventil (6) ein normalerweise geschlossenes Einwegventil aus weichem Gummi ist und eine Montagerichtung eines Endes mit einer normalerweise geschlossenen Entlüftung (600) zum inneren Hohlraum des Adapters (5) hin ausgerichtet ist.

6. Kraftstoffförderpumpe, umfassend einen Öleinlassbalg (1) und einen Ölauslassbalg (10), die durch einen Adapter (5) verbunden sind, wobei der Adapter (5) mit einem Bleidichtungsstopfen (4) und einem Luftentlüftungsventil (6) versehen ist, wobei die Kraftstoffförderpumpe ferner ein Verbindungsrohr (11), das an einem freien Ende des Öleinlassbalgs (1) angeordnet ist, eine im Verbindungsrohr (11) eingebaute Pumpe (12), eine an einem freien Ende des Ölauslassbalgs (10) angeordnete Pistolen-Düse (13) und einen außerhalb des Adapters (5) angeordneten Steuerkasten (14) umfasst, wobei der Steuerkasten (14) innen mit einer Leiterplatte (141) und einer Batterie (142) versehen ist und über Drähte elektrisch mit der Pumpe (12) verbunden ist; wobei die Pumpe (12) ein Außengehäuse (121) und einen eingebauten Motor (122) umfasst und Laufräder (123) an einer Abtriebswelle des Motors (122) angeordnet sind; wobei der Motor (122) auf einer Seite in der Nähe eines Flüssigkeitseinlasses (111) des Verbindungsrohrs (11) mit einem ersten Dichtungsmechanismus versehen ist, und wobei der Motor (122) auf einer Seite in der Nähe eines Flüssigkeitsauslasses (112) des Verbindungsrohrs (11) mit einem zweiten Dichtungsmechanismus versehen ist.

7. Kraftstoffförderpumpe nach Anspruch 6, wobei der erste Dichtungsmechanismus eine Stopfbuchse (a) umfasst, wobei die Stopfbuchse (a) an einem Ende des Außengehäuses (121) eingebettet und festgeklemmt ist, wobei ein Ausgangsende des Motors (122) mit einer Motorwellendichtung (c) ummantelt und verbunden ist, und wobei die Motorwellendichtung (c) in die Stopfbuchse (a) eingebettet und darin installiert ist; wobei eine Gummidichtung (b) ferner zwischen der Stopfbuchse (a) und dem Außengehäuse (121) angeordnet ist; wobei der zweite Dichtungsmechanismus ein Gummiteil (d) umfasst, und wobei ein Dichtungsteil (1211) auf einer Seite des Außengehäuses (121) ausgebildet ist; wobei ein Ende des Gummiteils (d) durch das Dichtungsteil (1211) hindurch ragt und mit einer Innenwand des Dichtungsteils (1211) geklemmt ist; wobei eine Außenfläche des Gummiteils (d) mit einem Dichtungsloch (dl) versehen ist, das mit einer elektrischen Verkabelung des Motors (122) abgestimmt, und wobei eine Außenwand der elektrischen Verkabelung des Motors (122) fest mit einer Innenwand des Dichtungslochs (dl) in einer abgedichteten Weise verbunden ist, so dass die Dichtungsleistung der elektrischen Verkabelung des Motors (122) verbessert werden kann.

8. Kraftstoffförderpumpe, umfassend eine modulare Durchflusskanalstruktur für eine Kraftstoffförderpumpe nach Anspruch 1 und eine Kraftstoffförderpumpe nach Anspruch 6,

9. Kraftstoffförderpumpe nach Anspruch 8, wobei die Verbindung zwischen dem Öleinlassbalg (1) und dem Verbindungsrohr (11) sowie die Verbindung zwischen dem Ölauslassbalg (10) und der Pistolenmündung (13) ebenfalls durch Befestigungselemente realisiert wird, um eine schnelle Demontage zu erleichtern.

10. Kraftstoffförderpumpe nach Anspruch 9, wobei der erste Dichtungsmechanismus eine Stopfbuchse (a) umfasst, wobei die Stopfbuchse (a) an einem Ende des Außengehäuses (121) eingebettet und festgeklemmt ist, wobei ein Ausgangsende des Motors (122) mit einer Motorwellendichtung (c) ummantelt und verbunden ist, und wobei die Motorwellendichtung (c) in die Stopfbuchse (a) eingebettet und darin installiert ist; wobei eine Gummidichtung (b) ferner zwischen der Stopfbuchse (a) und dem Außengehäuse (121) angeordnet ist; wobei der zweite Dichtungsmechanismus ein Gummiteil (d) umfasst, und wobei ein Dichtungsteil (1211) auf einer Seite des Außengehäuses (121) ausgebildet ist; wobei ein Ende des Gummiteils (d) durch das Dichtungsteil (1211) hindurch ragt und mit einer Innenwand des Dichtungsteils (1211) geklemmt ist; wobei eine Außenfläche des Gummiteils (d) mit einem Dichtungsloch (dl) versehen ist, das mit einer elektrischen Verkabelung des Motors (122) abgestimmt, und wobei eine Außenwand der elektrischen Verkabelung des Motors (122) fest mit einer Innenwand des Dichtungslochs (dl) in einer abgedichteten Weise verbunden ist, so dass die Dichtungsleistung der elektrischen Verkabelung des Motors (122) verbessert werden kann.

11. Kraftstoffförderpumpe nach Anspruch 10, wobei ein Steuerschalter (15) und eine Kontrollleuchte (16) in der Reihenfolge in eine Außenfläche des Steuerkastens (14) eingebettet sind, und wobei der Steuerschalter (15) sowie die Kontrollleuchte (16) elektrisch mit dem Motor (122) verbunden sind; wobei eine Gleichstrombuchse in eine Seite einer Außenfläche des Steuerkastens (14) eingebettet ist, um eine externe Stromverbindung zu realisieren.

12. Kraftstoffförderpumpe nach Anspruch 11, wobei ein Montagerohr (131) an einer Seite einer Innenwand eines Auslassendes der Pistolen-Düse (13) ausgebildet ist und eine Sensorschale in das Montagerohr (131) eingebettet ist; wobei ein Infrarotsensor (17) in einem Hohlraum der Sensorschale installiert ist, und wobei der Infrarotsensor (17) über eine elektrische Verkabelung mit dem Steuerkasten (13) verbunden ist; wobei ein Gummidichtungstopfen ferner zwischen dem Montagerohr (131) und der Sensorschale angeordnet ist, und wobei die elektrische Verkabelung des Infrarotsensors (17) durch den Gummidichtungstopfen verläuft, und wobei die Dichtungsanordnung durch den Gummidichtungstopfen realisiert wird, sodass der Infrarotsensor (17) vollständig in den Hohlraum der Sensorschale abgedichtet ist.

## Revendications

1. Structure de passage d'écoulement de pompe de transfert de carburant modulaire, comprenant un soufflet d'entrée d'huile (1), un bouchon de plomb d'étanchéité (4), un adaptateur (5), une valve de ventilation (6) et un soufflet de sortie d'huile (10), dans laquelle les ports de connexion aux deux extrémités de l'adaptateur (5) sont respectivement équipés et fixés avec un soufflet d'entrée d'huile (1) et un soufflet de sortie d'huile (10) en utilisant des éléments de fixation ; l'adaptateur (5) est fixé de manière fixe avec un conduit d'entrée d'huile (100) du soufflet d'entrée d'huile (1), et une surface de paroi d'extrémité dans une direction axiale de l'adaptateur (5) est pourvue d'un orifice de ventilation (101) ;
**caractérisée en ce que**
la valve de ventilation (6) est équipée d'un capuchon de ventilation (7) disposé à l'extérieur de l'orifice de ventilation (101) ; un conduit de sortie d'huile (200) du soufflet de sortie d'huile (10) est installé de manière fixe sur l'adaptateur (5), et un trou traversant (201) est formé sur la surface de paroi d'extrémité dans la direction axiale de l'adaptateur (5), et le bouchon de plomb d'étanchéité (4) est installé dans le trou traversant (201) ; une paroi de cavité interne de l'élément de fixation est opposée à la structure du soufflet, et une structure ondulée pour le coincement et la fixation est également formée de manière intégrale ; les parois externes aux deux extrémités de l'adaptateur (5) sont formées de manière intégrale avec des bossages annulaires (300) pour que l'élément de fixation soit installé de manière fixe.

2. Structure de passage d'écoulement de pompe de transfert de carburant modulaire selon la revendication 1, dans laquelle l'élément de fixation pour fixer le soufflet d'entrée d'huile (1) consiste en un premier élément de fixation (2) et une première pièce d'accouplement (3), tandis que l'élément de fixation pour fixer le soufflet de sortie d'huile (10) consiste en un second élément de fixation (8) et une seconde pièce d'accouplement (9).

3. Structure de passage d'écoulement de pompe de transfert de carburant modulaire selon la revendication 1, dans laquelle le soufflet d'entrée d'huile (1) et le soufflet de sortie d'huile (10) sont tous deux des tuyaux ondulés avec une conception circulaire.

4. Structure de passage d'écoulement de pompe de transfert de carburant modulaire selon la revendication 2, dans laquelle le premier élément de fixation (2) et le second élément de fixation (8) sont tous deux formés de manière intégrale avec des boutons inversés pour correspondre aux positions de verrouillage de la première pièce d'accouplement (3) et de la seconde pièce d'accouplement (9) respectivement.

5. Structure de passage d'écoulement de pompe de transfert de carburant modulaire selon la revendication 1, dans laquelle la valve de ventilation (6) est une valve unidirectionnelle normalement fermée en caoutchouc souple, et une direction de montage d'une extrémité avec un orifice normalement fermé (600) est vers la cavité interne de l'adaptateur (5).

6. Pompe de transfert de carburant, comprenant un soufflet d'entrée d'huile (1) et un soufflet de sortie d'huile (10) connectés par un adaptateur (5), dans laquelle l'adaptateur (5) est pourvu d'un bouchon de plomb d'étanchéité (4) et d'une valve de ventilation (6), dans laquelle la pompe de transfert de carburant comprend en outre un tuyau de raccordement (11) disposé à une extrémité libre du soufflet d'entrée d'huile (1), une pompe (12) intégrée dans le tuyau de raccordement (11), un pistolet de distribution (13) disposé à une extrémité libre du soufflet de sortie d'huile (10) et un boîtier de commande (14) disposé à l'extérieur de l'adaptateur (5), dans laquelle le boîtier de commande (14) est pourvu intérieurement d'une carte PCB (141) et d'une batterie (142) et est connecté électriquement avec la pompe (12) par des fils ; la pompe (12) comprend un boîtier extérieur (121) et un moteur intégré (122), et des turbines (123) sont disposées sur un arbre de sortie du moteur (122) ; le moteur (122) est pourvu d'un premier mécanisme d'étanchéité d'un côté proche d'une entrée de liquide (111) du tuyau de raccordement (11), et le moteur (122) est pourvu d'un second mécanisme d'étanchéité d'un côté proche d'une sortie de liquide (112) du tuyau de raccordement (11).

7. Pompe de transfert de carburant selon la revendication 6, dans laquelle le premier mécanisme d'étanchéité comprend un presse-étoupe (a), le presse-étoupe (a) est encastré et serré à une extrémité du boîtier extérieur (121), une extrémité de sortie du moteur (122) est manchonnée et connectée avec un joint d'arbre moteur (c), et le joint d'arbre moteur (c) est encastré et installé à l'intérieur du presse-étoupe (a) ; un joint en caoutchouc (b) est en outre disposé entre le presse-étoupe (a) et le boîtier extérieur (121) ; le second mécanisme d'étanchéité comprend un élément en caoutchouc (d), et un élément d'étanchéité (1211) est formé sur un côté du boîtier extérieur (121) ; une extrémité de l'élément en caoutchouc (d) pénètre à travers l'élément d'étanchéité (1211) et est serrée avec une paroi interne de l'élément d'étanchéité (1211) ; une surface externe de l'élément en caoutchouc (d) est pourvue d'un orifice d'étanchéité (d1) adapté avec un câblage électrique du moteur (122), et une paroi externe du câblage électrique du moteur (122) est connectée de manière fixe avec une paroi interne de l'orifice d'étanchéité (d1) de manière étanche, de sorte que la performance d'étanchéité du câblage électrique du moteur (122) peut être améliorée.

8. Pompe de transfert de carburant, comprenant une structure de passage d'écoulement de pompe de transfert de carburant modulaire selon la revendication 1 et une pompe de transfert de carburant selon la revendication 6,

9. Pompe de transfert de carburant selon la revendication 8, dans laquelle la connexion entre le soufflet d'entrée d'huile (1) et le tuyau de raccordement (11), et la connexion entre le soufflet de sortie d'huile (10) et le pistolet de distribution (13) sont également réalisées par des éléments de fixation, de manière à faciliter le démontage rapide.

10. Pompe de transfert de carburant selon la revendication 9, dans laquelle le premier mécanisme d'étanchéité comprend un presse-étoupe (a), le presse-étoupe (a) est encastré et serré à une extrémité du boîtier extérieur (121), une extrémité de sortie du moteur (122) est manchonnée et connectée avec un joint d'arbre moteur (c), et le joint d'arbre moteur (c) est encastré et installé à l'intérieur du presse-étoupe (a) ; un joint en caoutchouc (b) est en outre disposé entre le presse-étoupe (a) et le boîtier extérieur (121) ; le second mécanisme d'étanchéité comprend un élément en caoutchouc (d), et un élément d'étanchéité (1211) est formé sur un côté du boîtier extérieur (121) ; une extrémité de l'élément en caoutchouc (d) pénètre à travers l'élément d'étanchéité (1211) et est serrée avec une paroi interne de l'élément d'étanchéité (1211) ; une surface externe de l'élément en caoutchouc (d) est pourvue d'un orifice d'étanchéité (d1) adapté avec un câblage électrique du moteur (122), et une paroi externe du câblage électrique du moteur (122) est connectée de manière fixe avec une paroi interne de l'orifice d'étanchéité (d1) de manière étanche, de sorte que la performance d'étanchéité du câblage électrique du moteur (122) peut être améliorée.

11. Pompe de transfert de carburant selon la revendication 10, dans laquelle un interrupteur de commande (15) et un témoin lumineux (16) sont encastrés dans une surface externe du boîtier de commande (14) en séquence, et l'interrupteur de commande (15) et le témoin lumineux (16) sont connectés électriquement avec le moteur (122) ; une prise CC est encastrée dans un côté d'une surface externe du boîtier de commande (14), de manière à réaliser la connexion d'alimentation externe.

12. Pompe de transfert de carburant selon la revendication 11, dans laquelle un tuyau de montage (131) est formé sur un côté d'une paroi interne d'une extrémité de sortie du pistolet de distribution (13), et une coque de détection est encastrée dans le tuyau de montage (131) ; un capteur infrarouge (17) est installé dans une cavité de la coque de détection, et le capteur infrarouge (17) est connecté au boîtier de commande (13) par un câblage électrique ; un bouchon d'étanchéité en caoutchouc est en outre disposé entre le tuyau de montage (131) et la coque de détection, et le câblage électrique du capteur infrarouge (17) passe à travers le bouchon d'étanchéité en caoutchouc, et l'ensemble d'étanchéité est réalisé à travers le bouchon d'étanchéité en caoutchouc, de sorte que le capteur infrarouge (17) est complètement scellé dans la cavité interne de la coque de détection.
